# EUROPÄISCHE PATENTSCHRIFT

(11) **EP 4 558 307 B1**
(45) Veröffentlichungstag und Bekanntmachung des Hinweises auf die Patenterteilung: **10.06.2026**
(21) Anmeldenummer: 23761471.4
(22) Anmeldetag: 21.08.2023
(51) Int. Cl.: C21D 7/04, B24B 5/04, B23Q 3/155, B23P 9/02, B24B 19/02, B24B 27/00, B24B 39/04, B21H 1/18, B21H 7/06, B24B 19/00

(54) **VORRICHTUNG ZUM BEARBEITEN, INSBESONDERE ZUM FESTWALZEN VON WELLEN**
DEVICE FOR PROCESSING, IN PARTICULAR DEEP ROLLING, SHAFTS
DISPOSITIF DE TRAITEMENT, EN PARTICULIER DE CYLINDRAGE, D'ARBRES

(30) Priorität: 15.09.2022 DE 102022123633
(43) Veröffentlichungstag der Anmeldung: 28.05.2025
(73) Patentinhaber: HEGENSCHEIDT-MFD GmbH, 41812 Erkelenz (DE)
(72) Erfinder: HENK, Christian, 41812 Erkelenz (DE); HEFFE, Roland, 41352 Korschenbroich (DE)
(74) Vertreter: Cohausz & Florack
(86) Internationale Anmeldenummer: PCT/EP2023/072879
(87) Internationale Veröffentlichungsnummer: WO 2024/056320

(56) Entgegenhaltungen:
- EP-B1- 2 588 273
- JP-A- S6 039 039
- US-A- 3 165 814

## Beschreibung

Die Erfindung betrifft eine Vorrichtung zum Bearbeiten, insbesondere zum Festwalzen, von Wellen und anderen Bauteilen, umfassend: zwei Körnerspitzen zur beidseitigen Aufnahme einer zu bearbeitenden Welle, wenigstens einen Antrieb zum Drehen der zu bearbeitenden Welle, wenigstens ein Paar von Walzwerkzeugen zum Bearbeiten, insbesondere Festwalzen der zu bearbeitenden Welle, wobei die beiden Körnerspitzen auf einer Mittelachse angeordnet sind, wobei wenigstens eine Körnerspitze entlang der Mittelachse verschiebbar ist, wobei wenigstens ein Paar von Walzwerkzeugen auf einem beweglichen Axialschlitten angeordnet ist, der entlang der Mittelachse verschiebbar ist, und wobei die Walzwerkzeuge in radialer Richtung relativ zu der Mittelachse verschiebbar sind.

Die Erfindung betrifft zudem die Verwendung einer derartigen Vorrichtung zum Festwalzen von Wellen, insbesondere von Radsatzwellen von Radsätzen für Schienenfahrzeuge.

Die Bearbeitung von Wellen hat insbesondere im Bereich von Radsätzen für Schienenfahrzeuge eine hohe Relevanz, da die Betriebsfestigkeit von Radsatzachsen und Radsatzwellen durch das Festwalzen deutlich gesteigert werden kann. Beim Festwalzen werden geeignete Walzkörper unter Anpressdruck über die zu bearbeitende Bauteiloberfläche geführt bzw. gerollt. Dabei treten im Bereich der Oberfläche bzw. der Randschicht des bearbeiteten Materials unterschiedliche Effekte auf, beispielsweise wird die Oberfläche geglättet (kleine Kerben werden eingeebnet) und der Werkstoff wird plastisch verformt und dabei verfestigt. Zudem können durch das Festwalzen unerwünschte Eigenspannungen abgebaut werden, die eventuell in der Werkstückrandschicht vorhanden sind; ebenso kann durch Festwalzen ein günstiger Eigenspannungszustand im Bereich der Randschicht aufgebaut werden, insbesondere können günstige Druckeigenspannungen erzeugt werden. All dies führt dazu, dass festgewalzte Radsatzwellen den unterschiedlichen auf sie einwirkenden Belastungen besser widerstehen als nicht festgewalzte Radsatzwellen; das Festwalzen kann daher die Lebensdauer von Radsätzen und anderen ähnlich belasteten Bauteilen stark steigern, was beispielsweise durch Dauerschwingversuche nachweisbar ist.

Eine Maschine zum Festwalzen von Radsatzwellen ist beispielsweise aus der EP 2 588 273 B1 bekannt. Die dort beschriebene Maschine dient dem Festwalzen von Radsatzwellen von Radsätzen für Schienenfahrzeuge. Die Maschine weist zwei Körnerspitzen auf, zwischen denen die zu bearbeitenden Radsätzen drehbar eingespannt werden. Zudem weist die Maschine mehrere Paare von Festwalzwerkzeugen auf, die relativ zu den Radsätzen bewegbar sind.

Ein Nachteil von Vorrichtungen dieser Art liegt darin, dass die Werkzeuge aufgrund ihrer Anordnung und eingeschränkten Beweglichkeit nur sehr aufwändig manuell gewechselt werden können. Ein Wechsel kann beispielsweise erforderlich sein, wenn ein anderer Bereich der Welle oder eine andere Welle bearbeitet werden soll und hierfür ein Walzkörper mit einer anderen Geometrie eingesetzt werden soll. Die aufwändigen Wechselvorgänge haben unter anderem zur Folge, dass derartige Vorrichtungen häufig nur für einen sehr eng eingegrenzten Zweck eingesetzt werden, beispielsweise für das Festwalzen von Radsätzen mit weitgehend identischer Geometrie.

Vor diesem Hintergrund liegt der Erfindung die Aufgabe zugrunde, die eingangs beschriebene Vorrichtung derart auszugestalten und weiterzubilden, dass eine effiziente Bearbeitung von Bauteilen mit unterschiedlicher Geometrie ermöglicht wird.

Diese Aufgabe wird bei einer Vorrichtung nach dem Oberbegriff von Patentanspruch 1 gelöst durch wenigstens eine Wechseleinrichtung zum Wechseln der Walzwerkzeuge.

Die Erfindung betrifft eine Vorrichtung zum Bearbeiten, insbesondere zum Festwalzen, von Wellen und anderen Bauteilen. Neben dem Festwalzen kann die Vorrichtung auch für andere Bearbeitungsverfahren einsetzbar, beispielsweise für das Polierwalzen, das Glattwalzen oder das Richtwalzen bzw. das Drehrichten. Es werden vorzugsweise lange zylindrische Bauteile bearbeitet, insbesondere Wellen von Radsätzen für Schienenfahrzeuge. Die Vorrichtung umfasst zunächst zwei Körnerspitzen zur beidseitigen Aufnahme einer zu bearbeitenden Welle. Durch die Körnerspitzen wird erreicht, dass die zu bearbeitende Welle an ihren beiden gegenüberliegenden Endflächen sicher, aber gleichwohl drehbar in der Vorrichtung gehalten werden kann. Die Körnerspitzen können beispielsweise kegelförmig geformt sein. Die beiden Körnerspitzen sind auf einer Mittelachse angeordnet, die - bei eingespannter Welle - der Drehachse der Welle entspricht. Zudem ist wenigstens eine Körnerspitze entlang der Mittelachse (also in axialer Richtung) verschiebbar. Alternativ hierzu ist es möglich, dass beide Körnerspitzen entlang der Mittelachse (also in axialer Richtung) verschiebbar sind. Der axiale Abstand zwischen beiden Körnerachsen ist also verstellbar, so dass unterschiedliche lange Wellen eingespannt und bearbeitet werden können, beispielsweise Wellen mit einer Länge von bis zu 3000 mm. Die Durchmesser der zu bearbeitenden Wellen können im Bereich zwischen 50 mm und 500 mm liegen. Die Vorrichtung umfasst auch wenigstens einen Antrieb zum Drehen der zu bearbeitenden Welle. Es können auch zwei oder mehr Antriebe vorgesehen sein. Die Antriebsleistung des wenigstens einen Antriebs kann auf die Welle übertragen werden, um diese zu drehen. Vorzugsweise wird die für die Bearbeitung notwendige Relativbewegung zwischen der zu bearbeitenden Welle und den Walzwerkzeugen durch eine Bewegung (Rotation) der Welle erreicht und nicht durch eine Bewegung der Walzwerkzeuge um die Welle herum. Je nach Bearbeitungsverfahren rotiert die Welle mit Drehzahlen zwischen 20 U/min und 400 U/min. Die Vorrichtung umfasst zudem Walzwerkzeuge, die paarweise angeordnet sind, wobei ein Paar durch zwei auf gegenüberliegenden Seiten der Welle angeordneten Walzwerkzeugen gebildet wird. Die Walzwerkzeuge sind in radialer Richtung relativ zu der Mittelachse verschiebbar, sie können also in Richtung der Welle und von der Welle weg bewegt werden. Die Walzwerkzeuge dienen dazu, die Welle zu bearbeiten; sie werden hierzu auf die Oberfläche der sich drehenden Welle gepresst. Dies erfolgt mit Walzkräften von 2.000 N bis 50.000 N. Wenigstens ein Paar von Walzwerkzeugen ist auf einem beweglichen Axialschlitten angeordnet ist, der entlang der Mittelachse verschiebbar ist. Vorzugsweise sind alle Paare von Walzwerkzeugen auf einem derartigen Axialschlitten angeordnet. Auf diese Weise können die Walzwerkzeuge an die zu bearbeitende Stelle der Welle bewegt werden.

Erfindungsgemäß wird die Vorrichtung ergänzt durch wenigstens eine Wechseleinrichtung zum Wechseln der Walzwerkzeuge. Unter einer Wechseleinrichtung wird eine Einrichtung verstanden, die die Walzwerkzeuge wenigstens teilautomatisch, vorzugsweise aber vollautomatisch wechseln können. Dies hat den Vorteil, dass der Wechsel der Walzwerkzeuge mit nur sehr wenigen oder ganz ohne manuelle Eingriffe ermöglicht wird. Durch den (teil- oder voll-) automatischen Wechsel der Walzwerkzeuge können die Rüstzeiten erheblich verkürzt werden, so dass die Vorrichtung produktiver nutzbar ist. Ein weiterer Vorteil der schnelleren Wechselmöglichkeit der Werkzeuge liegt darin, dass die Vorrichtung flexibler für unterschiedliche Bearbeitungsaufgaben und unterschiedliche Bauteile genutzt werden kann und somit auch bei kleinen Stückzahlen bzw. Losgrößen wirtschaftlich arbeitet.

Nach einer Ausgestaltung der Vorrichtung kann vorgesehen sein, dass die Wechseleinrichtung beweglich ist, insbesondere um eine Drehachse drehbar und/oder in vertikaler Richtung verschiebbar gelagert ist. Durch die Beweglichkeit der Wechseleinrichtung kann ein besonders effizienter und störungsfreier Wechsel der Werkzeuge erreicht werden, da die Wechseleinrichtung das zu wechselnde Werkzeug aufnehmen kann, es von der Bearbeitungsposition entfernen kann und ein anderes Werkzeug in die Bearbeitungsposition bringen kann.

Nach einer Ausgestaltung der Vorrichtung ist vorgesehen, dass die Wechseleinrichtung wenigstens zwei, insbesondere wenigstens vier Aufnahmen für Walzwerkzeuge aufweist. Indem die Wechseleinrichtung mehrere Aufnahmen für Walzwerkzeuge aufweist, kann die Vorrichtung mit unterschiedlichen Walzwerkzeugen für verschiedene Bearbeitungsaufgaben (z.B. Festwalzen oder Richtwalzen) und/oder für unterschiedliche Bauteilgeometrien (z.B. unterschiedliche Durchmesser) bestückt werden. Zudem führt die Aufbewahrung von Walzwerkzeugen in der Wechseleinrichtung zu einem noch schnelleren Wechsel der Werkzeuge, da die von den Werkzeugen zurückzulegenden Wege so kurz wie möglich sind.

Gemäß einer weiteren Ausgestaltung der Vorrichtung ist vorgesehen, dass die Wechseleinrichtung eine Spannvorrichtung zum Lösen und Spannen der Walzwerkzeuge aufweist. Wenn die Wechseleinrichtung nicht nur den An- und Abtransport von Walzwerkzeugen, sondern durch eine Spannvorrichtung auch das Lösen und (Ein-)Spannen von Walzwerkzeugen beherrscht, kann der Werkzeugwechsel vollautomatisch, also ohne manuellen Eingriff erfolgen. Dies verkürzt die Rüstzeiten noch weiter und stellt zudem eine fehlerfreie, gleichbleibende Fixierung der Festwalzwerkzeuge sicher.

Bei einer weiteren Ausbildung der Vorrichtung ist vorgesehen, dass die Wechseleinrichtung im Bereich der Körnerspitzen angeordnet ist. Mit anderen Worten ist vorgesehen, dass die Wechseleinrichtung - in axialer Richtung der Welle gesehen - nicht "neben" der Welle, sondern "vor" und "hinter" der Welle angeordnet sind. Diese Anordnung ist besonders platzsparend und kompakt und ermöglicht auch bei Wellen mit großem Durchmesser eine kollisionsfreie Bearbeitung der Welle durch die Walzwerkzeuge. Denn durch die beschriebene Anordnung der Wechseleinrichtung wird kein Bauraum in Werkstücknähe benötigt, wodurch die Bearbeitungsmöglichkeiten uneingeschränkt erhalten bleiben. Auch das Wechseln der zu bearbeitenden Wellen wird durch die beschriebene Anordnung der Wechseleinrichtungen erheblich erleichtert.

Nach einer weiteren Ausgestaltung der Vorrichtung sind zwei oder mehr Paare von Walzwerkzeugen vorgesehen. Durch eine Erhöhung der Anzahl der Walzwerkzeugpaare können auch besonders lange Wellen schnell bearbeitet werden.

Als besonders vorteilhaft haben sich zwei Paare von Walzwerkzeugen herausgestellt, da auch zwei Paare von Walzwerkzeugen automatisch gewechselt werden können: Das erste Paar von Walzwerkzeugen kann an die eine Seite der Vorrichtung (in axialer Richtung "vor" die Welle) bewegt werden und von dort angeordneten Wechseleinrichtungen gewechselt werden und das zweite Paar von Walzwerkzeugen kann an die gegenüberliegende Seite der Vorrichtung (in axialer Richtung "hinter" die Welle) bewegt werden und von dort angeordneten Wechseleinrichtungen gewechselt werden. Diese beiden - "äußeren" - Paare von Walzwerkzeugen können durch ein drittes oder weitere dazwischenliegende Paare von Walzwerkzeugen ergänzt werden, die beispielsweise manuell gewechselt werden können.

Gemäß einer weiteren Ausgestaltung der Vorrichtung ist vorgesehen, dass wenigstens ein Paar von Walzwerkzeugen auf einem beweglichen Axialschlitten angeordnet ist, der entlang der Mittelachse verschiebbar ist. Die Anordnung auf Schlitten hat den Vorteil, dass zwei gegenüberliegend angeordnete Walzwerkzeuge auf demselben Axialschlitten angeordnet werden können, wodurch sichergestellt ist, dass diese beiden Walzwerkzeuge stets dieselbe axiale Position einnehmen, also immer präzise "gegenüberliegend" angeordnet sind. Zudem wird durch diese Anordnung erreicht, dass der Axialschlitten die Walzkräfte beider Walzwerkzeuge aufnehmen kann, was konstruktiv besonders günstig ist, da die beiden Walzkräfte ein eines Paares von Walzwerkzeugen entgegengerichtet und (betragsmäßig) gleich groß sind und sicher daher ausgleichen bzw. aufheben. Vorzugsweise ist der Axialschlitten in vertikaler Richtung unter der Welle angeordnet. Bevorzugt ist zudem, dass jedes Paar von Walzwerkzeugen auf jeweils einem (separaten) Axialschlitten angeordnet ist; es sollen also alle Paare über einen eigenen Axialschlitten verfügen.

Zu dieser Ausgestaltung wird weiter vorgeschlagen, dass auf wenigstens einem Axialschlitten zwei in radialer Richtung verschiebbare Radialschlitten angeordnet sind, auf denen jeweils ein Walzwerkzeug angeordnet ist. Durch die Kombination von Axialschlitten mit Radialschlitten können die Walzwerkzeuge nicht nur in axialer Richtung, sondern auch in radialer Richtung bewegt werden, wodurch die Walzwerkzeuge in einer waagerecht angeordneten Ebene zweidimensional bewegt werden können. Ein Paar von Walzwerkzeugen kann sich - anders als bei den Axialschlitten - keinen gemeinsamen Radialschlitten "teilen", da sie im Betrieb in radialer Richtung entgegengesetzte Bewegungen ausführen müssen und die Welle "zangenartig" zwischen sich aufnehmen müssen. Jeweils zwei Radialschlitten "teilen" sich also einen Axialschlitten. Vorzugsweise sind auf allen Axialschlitten zwei in radialer Richtung verschiebbare Radialschlitten angeordnet.

Zu dieser Ausgestaltung wird zudem vorgeschlagen, dass auf wenigstens einem Axialschlitten eine in vertikaler Richtung verschiebbare Wellenablage angeordnet ist. Vorzugsweise ist auf wenigstens zwei Axialschlitten, insbesondere auf den beiden äußeren Axialschlitten, jeweils eine in vertikaler Richtung verschiebbare Wellenablage angeordnet. Die Wellenablagen (auch: "Ablageprismen") dienen dazu, die Vorrichtung mit Wellen unterschiedlicher Durchmesser beladen zu können. Hierzu weisen die Wellenablagen vorzugsweise eine Oberseite auf, die eine (Selbst- )Zentrierung der Welle parallel zur Mittelachse ermöglicht, beispielsweise eine V-förmige oder U-förmige Oberseite. Durch die vertikale Verstellbarkeit der Wellenablagen wird erreicht, dass Wellen mit unterschiedlichen Durchmessern in eine für eine Einspannung zwischen den beiden Körnerspitzen geeignete Höhe gebracht werden können. Nach der Einspannung der Welle können die Wellenablagen wieder nach unten gefahren werden, um die Welle für die Bearbeitung freizugeben. Durch die Anordnung der Wellenablage an dem Axialschlitten wird erreicht, dass eine axiale Verschiebung des Axialschlittens auch zu einer axialen Verschiebung der Wellenablage führt, was beispielsweise die Anpassung an unterschiedlich lange Wellen erleichtert. Zudem hat eine Anordnung der Wellenablage an dem Axialschlitten den Vorteil, dass bei einer axialen Verschiebung des Axialschlittens keine Kollision mit der Wellenablage zu befürchten ist (im Gegensatz zu einer Anordnung der Wellenablage zwischen zwei Axialschlitten). Es kann vorgesehen sein, dass die Wellenablage eine Messeinrichtung aufweist. Dies hat den Vorteil, dass die Welle vermessen werden kann (insb. die axiale Position der Welle in der Vorrichtung oder der Rundlauf der Welle erfasst werden kann) während sie auf den Wellenablagen liegt, so dass die Messdaten nach der Einspannung der Welle für die Bearbeitung der Welle verwendet werden können.

Nach einer weiteren Ausgestaltung der Vorrichtung ist vorgesehen, dass wenigstens ein Walzwerkzeug schwenkbar gelagert ist, insbesondere relativ zu der Mittelachse beidseitig um wenigstens 90° schwenkbar ist. Vorzugsweise sind alle Walzwerkzeuge derart schwenkbar gelagert; jedenfalls aber die Walzwerkzeuge, denen eine Wechseleinrichtung zugeordnet ist. Die Walzwerkzeuge sollen vorzugsweise in einer horizontalen Ebene - also um eine vertikale Drehachse herum - schwenkbar sein. Die schwenkbare Lagerung hat mehrere Vorteile. Ein erster Vorteil liegt darin, dass die Walzwerkzeuge während des Walzvorgangs schräggestellt werden können, also nicht rechtwinklig zur Drehachse der Welle stehen. Dies hat beispielsweise den Vorteil, dass auch schwer zugängliche Stellen erreichbar sind, zum Beispiel Kerben oder Absätze. Ein zweiter Vorteil liegt darin, dass die Schwenkbarkeit der Walzwerkzeuge für die Werkzeugwechsel genutzt werden kann und diesen erleichtert. Denn wenn die Walzwerkzeuge um 90° geschwenkt werden, sind sie parallel zur Mittelachse ausgerichtet und können durch eine Verschiebung des Axialschlittens besonders dicht an die Wechseleinrichtung herangeführt werden.

Gemäß einer weiteren Ausbildung der Vorrichtung ist vorgesehen, dass jedem Walzwerkzeug ein Walzzylinder, insbesondere ein hydraulischer Walzzylinder zugeordnet ist. Durch Walzzylinder (und damit korrespondierende Kolben) können auch sehr hohe Walzkräfte zuverlässig auf die Walzwerkzeuge übertragen werden, wobei sich insbesondere hydraulische Systeme bewährt haben. Vorzugsweise sind die Walzwerkzeuge über eine Gabel drehbar an einem Kolben gelagert, der in den korrespondierenden Walzzylinder ein- und ausgefahren werden kann. Der Walzzylinder ist vorzugsweise (ggf. wie zuvor beschrieben schwenkbar) auf dem Radialschlitten gelagert, der wiederum auf dem Axialschlitten gelagert ist und bindet die Walzwerkzeuge drehbar gelagert und in radialer Richtung verschiebbar an die Schlitten an.

Nach einer weiteren Ausgestaltung der Vorrichtung ist vorgesehen, dass wenigstens ein schwenkbar gelagertes Walzwerkzeug eine vertikale Schwenkachse aufweist, die einen Abstand zu einem Berührpunkt von Walzwerkzeug und Welle aufweist, der 50 mm oder weniger, insbesondere von 35 mm oder weniger beträgt. Die im Betrieb auftretenden Bearbeitungskräfte (z.B. Walzkräfte) werden im Berührpunkt mit der Welle in das Walzwerkzeug eingeleitet. Aufgrund ihrer Größe können die Bearbeitungskräfte große Drehmomente verursachen, die gerade bei einer schwenkbaren Lagerung weniger leicht (z.B. von einem Motor) abgestützt werden können als bei einer starren Lagerung. Daher hat es sich als besonders vorteilhaft erwiesen, die Schwenkachse besonders dicht an dem Berührpunkt verlaufen zu lassen, idealerweise sogar durch den Berührpunkt laufen zu lassen (Abstand = 0 mm). Ein verringerter Abstand führt zu einem geringeren Hebelarm und somit zu geringeren Drehmomenten um die Schwenkachse herum. Auf diese Weise kann die gewünschte Schwenkstellung bzw. Winkelstellung des Walzwerkzeugs während der Bearbeitung auch bei hohen Walzkräften präzise eingehalten werden. Konstruktiv kann die Verringerung des Abstands beispielsweise dadurch erreicht werden, dass der Schwenkantrieb weit "innen", also fast unter der Welle, angeordnet wird und über einen radial nach außen ragenden Arm mit den Walzzylindern verbunden ist. Vorzugsweise sind alle schwenkbar gelagerten Walzwerkzeuge derart gestaltet.

Die zuvor beschriebene Vorrichtung eignet sich in allen dargestellten Ausgestaltungen in besonderer Weise für eine Verwendung zum Festwalzen von Wellen, insbesondere von Radsatzwellen von Radsätzen für Schienenfahrzeuge. Radsätze von Schienenfahrzeugen müssen aufgrund ihrer sehr hohen Fahrleistung besonders belastbar sein, um eine hohe Lebensdauer zu erreichen. Wegen der hohen Anzahl an im Betrieb befindlicher Radsätze kommen daher nur sehr kostengünstige und effiziente Bearbeitungsverfahren in Frage, was die erfindungsgemäße Vorrichtung besonders geeignet erscheinen lässt.

Die Erfindung wird nachfolgend anhand einer lediglich ein bevorzugtes Ausführungsbeispiel darstellende Zeichnung näher erläutert. In der Zeichnung zeigen:
- Fig. 1:: eine erfindungsgemäße Vorrichtung mit zu bearbeitender Welle in einer Draufsicht,
- Fig. 2:: die Vorrichtung aus Fig. 1 ohne Welle in einer geschnittenen Ansicht von oben,
- Fig. 3:: die Vorrichtung aus Fig. 1 in einer Stellung zum Wechseln der Werkzeuge,
- Fig. 4:: einen Teil der Vorrichtung aus Fig. 1 in vergrößerter Ansicht, und
- Fig. 5:: einen Teil der Vorrichtung aus Fig. 1 in einer Seitenansicht entlang der in Fig. 1 eingezeichneten Schnittebene V-V.

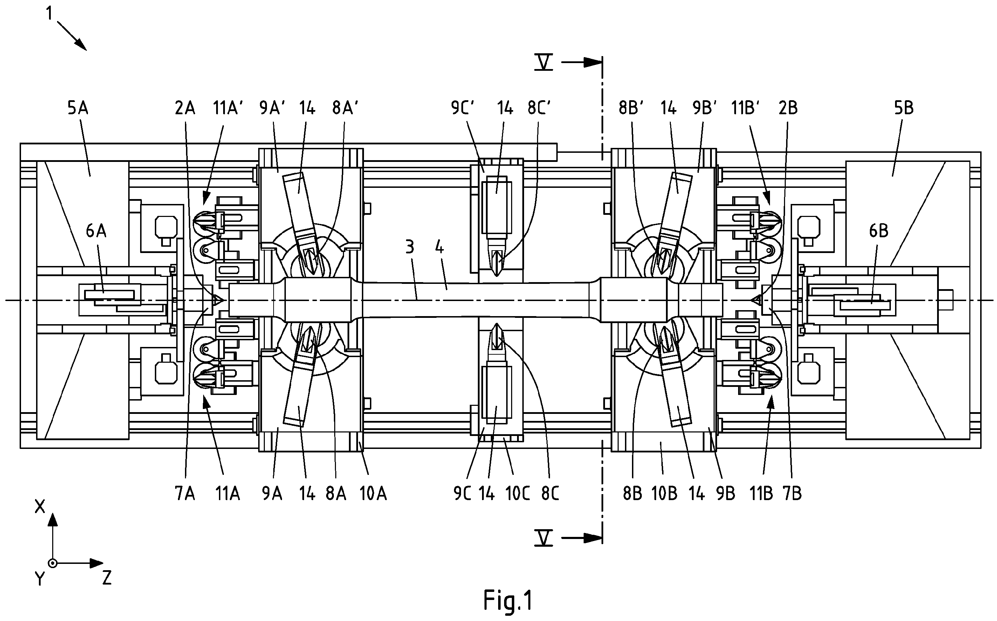

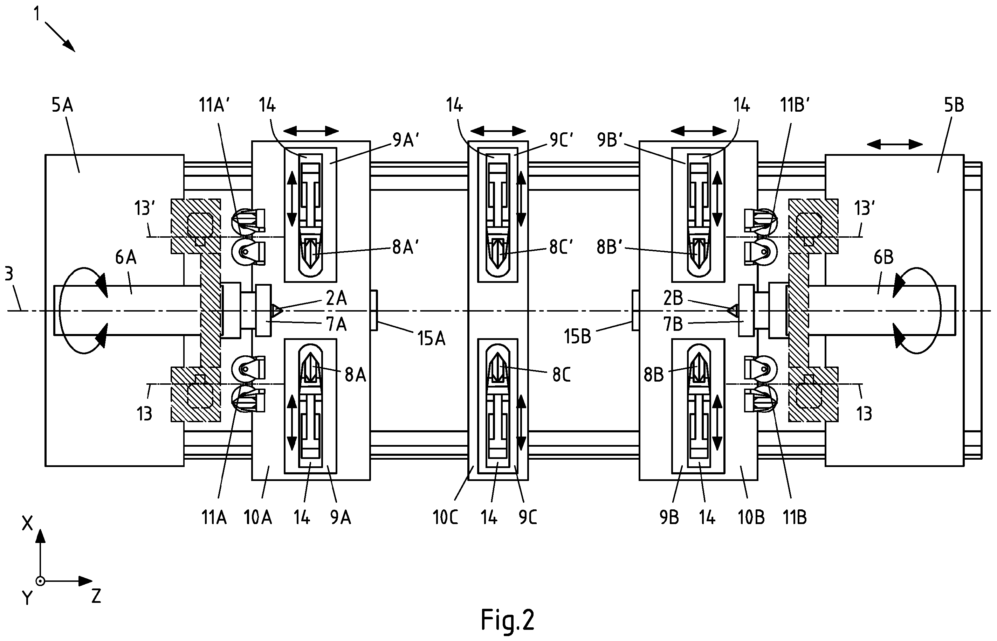

Fig. 1 zeigt eine erfindungsgemäße Vorrichtung 1 mit zu bearbeitender Welle in einer Draufsicht, Fig. 2 zeigt die Vorrichtung 1 aus Fig. 1 ohne Welle in einer geschnittenen Ansicht von oben. Die Vorrichtung 1 umfasst zwei Körnerspitzen 2A, 2B, die auf einer Mittelachse 3 angeordnet sind. Die Mittelachse 3 erstreckt sich in Z-Richtung, die gemeinsam mit einer horizontalen X-Richtung und einer vertikalen Y-Richtung ein Koordinatensystem bildet. Zwischen den Körnerspitzen 2A, 2B kann eine zu bearbeitende Welle 4 eingespannt und somit aufgenommen werden. Um Wellen 4 unterschiedlicher Länge bearbeiten zu können und das Einspannen zu erleichtern, ist wenigstens eine der beiden Körnerspitzen 2 entlang der Mittelachse 3 verschiebbar, so dass die beiden Körnerspitzen 2A, 2B unterschiedliche Abstände zueinander einnehmen können, vorzugsweise Abstände zwischen 0 mm und 3000 mm. Bei der in Fig. 1 und Fig. 2 gezeigten und insoweit bevorzugten Ausgestaltung der Vorrichtung 1 ist die links dargestellte erste Körnerspitze 2A an einem feststehenden Spindelkasten 5A angeordnet, während die rechts dargestellte zweite Körnerspitze 2B an einem beweglichen Reitstock 5B angeordnet ist und somit entlang der Mittelachse 3 verschiebbar ist.

Die in Fig. 1 und in Fig. 2 gezeigte Vorrichtung 1 umfasst zudem wenigstens einen Antrieb 6 zum Drehen der zu bearbeitenden Welle 4. Bei der in Fig. 1 und Fig. 2 gezeigten und insoweit bevorzugten Ausgestaltung der Vorrichtung 1 ist ein erster Antrieb 6A im Bereich der links angeordneten ersten Körnerspitze 2A angeordnet. Zusätzlich hierzu ist (allerdings nur optional) ein zweiter Antrieb 6B im Bereich der rechts angeordneten zweiten Körnerspitze 2B angeordnet. Die Übertragung der Antriebsleistung auf die zu bearbeitende Welle 4 erfolgt vorzugsweise über Rotationsmitnehmer 7A, 7B, die neben den Körnerspitzen 2A, 2B angeordnet sind und reibschlüssig und/oder formschlüssig die Welle 4 antreiben können. Die Rotationsbewegungen der Antriebe 6A, 6B sind in Fig. 2 mit jeweils einem kreisförmigen Doppelpfeil angedeutet.

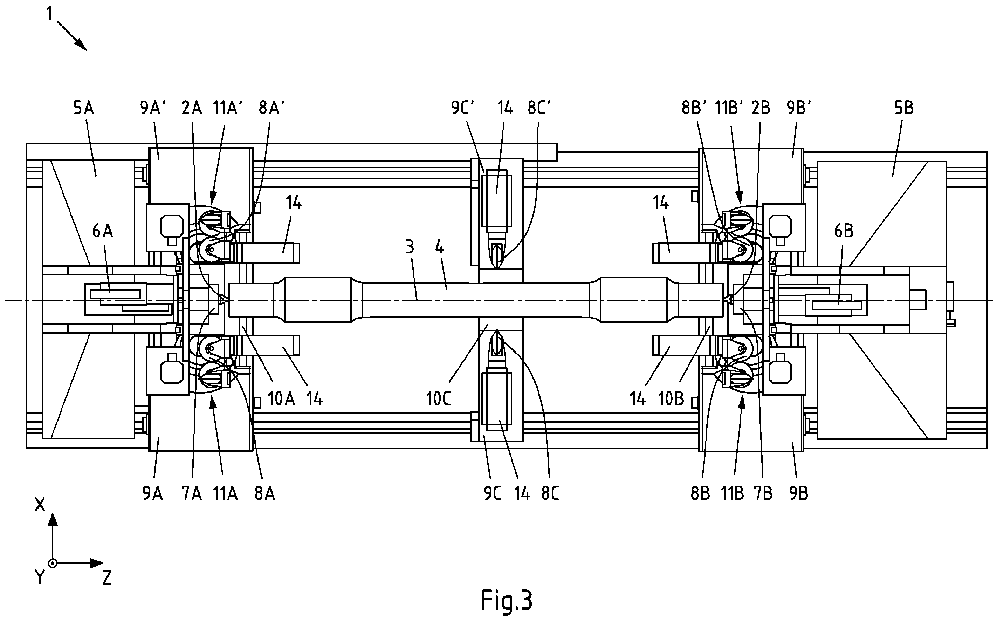

Die Vorrichtung 1 aus Fig. 1 und Fig. 2 umfasst auch drei Paare von Walzwerkzeugen 8 zum Festwalzen der zu bearbeitenden Welle 4. Zwei erste Walzwerkzeuge 8A, 8A' bilden ein erstes Paar, zwei zweite Walzwerkzeuge 8B, 8B' bilden ein zweites Paar und zwei dritte (mittlere) Walzwerkzeuge 8C, 8C' bilden ein drittes Paar. Jedem Walzwerkzeug 8 ist ein hydraulischer Walzzylinder 14 zugeordnet, durch den die Walzwerkzeuge 8 mit einer definierten Walzkraft auf die zu bearbeitende Welle 4 gedrückt werden können. Die Walzwerkzeuge 8 sind in unterschiedliche Richtungen beweglich: Die Walzwerkzeuge 8 sind zunächst (in Zylinderkoordinaten) in radialer Richtung (bzw. in kartesischen Koordinaten: in X-Richtung) relativ zu der Mittelachse 3 verschiebbar angeordnet. Konstruktiv kann dies dadurch erreicht werden, dass die Walzwerkzeuge 8 auf Radialschlitten 9 angeordnet sind; zudem wird durch die Walzzylinder 14 eine geringfügige radiale Beweglichkeit erreicht. Die ersten Walzwerkzeuge 8A, 8A' sind (mit jeweils einem Walzzylinder 14) auf jeweils einem ersten Radialschlitten 9A, 9A' angeordnet. Ebenso sind die zweiten Walzwerkzeuge 8B, 8B' (mit jeweils einem Walzzylinder 14) auf jeweils einem zweiten Radialschlitten 9B, 9B' angeordnet und die dritten (mittleren) Walzwerkzeuge 8C, 8C' sind (mit jeweils einem Walzzylinder 14) auf jeweils einem dritten (mittleren) Radialschlitten 9C, 9C' angeordnet. Die Walzwerkzeuge 8 sind auch (in Zylinderkoordinaten) in axialer Richtung (bzw. in kartesischen Koordinaten: in Z-Richtung) entlang der Mittelachse 3 verschiebbar angeordnet. Dies kann konstruktiv dadurch erreicht werden, dass Walzwerkzeuge 8 auf Axialschlitten 10 angeordnet sind, die entlang der Mittelachse 3 verschiebbar sind: Die ersten Walzwerkzeuge 8A, 8A' sind (über deren erste Radialschlitten 9A, 9A') auf einem ersten Axialschlitten 10A angeordnet. Ebenso sind die zweiten Walzwerkzeuge 8B, 8B' (über deren zweite Radialschlitten 9B, 9B') auf einem zweiten Axialschlitten 10B angeordnet und die dritten Walzwerkzeuge 8C, 8C' sind (über deren dritte Radialschlitten 9C, 9C') auf einem dritten (mittleren) Axialschlitten 10C angeordnet. Die axiale Beweglichkeit der Axialschlitten 10A, 10B, 10C und die radiale Beweglichkeit der Radialschlitten 9A, 9A', 9B, 9B', 9C, 9C' sind in Fig. 2 mit Doppelpfeilen angedeutet. In Fig. 2 sind auch zwei (in Fig. 1 und Fig. 3 von der Welle 4 verdeckte) vertikal verstellbare Wellenablagen 15A, 15B erkennbar, von denen die erste Wellenablage 15A an dem ersten Axialschlitten 10A angeordnet ist und von denen die zweite Wellenablage 15B an dem zweiten Axialschlitten 10B angeordnet ist.

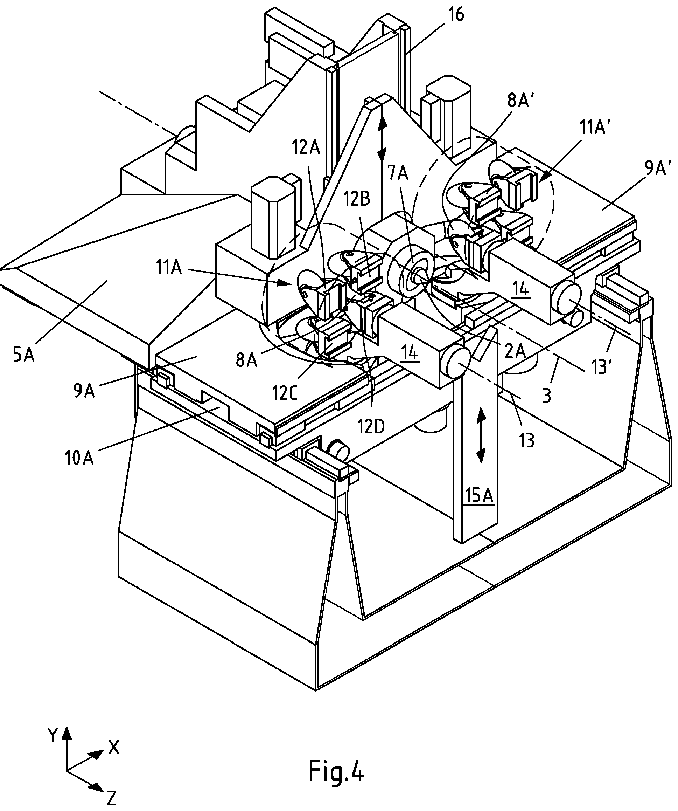

Die in Fig. 1 und in Fig. 2 dargestellte Vorrichtung 1 umfasst zudem wenigstens eine Wechseleinrichtung 11 zum Wechseln der Walzwerkzeuge 8. Bei der in Fig. 1 und Fig. 2 gezeigten und insoweit bevorzugten Ausgestaltung der Vorrichtung 1 sind vier Wechseleinrichtungen 11 vorgesehen: Zwei erste Wechseleinrichtungen 11A, 11A' sind in der Umgebung der ersten Körnerspitze 2A angeordnet und dienen dazu, die beiden ersten Walzwerkzeuge 8A, 8A' auszuwechseln. Zudem sind zwei zweite Wechseleinrichtungen 11B, 11B' in der Umgebung der zweiten Körnerspitze 2B angeordnet und dienen dazu, die beiden zweiten Walzwerkzeuge 8B, 8B' auszuwechseln. Für die dritten (mittleren) Walzwerkzeuge 8C, 8C' sind keine Wechseleinrichtungen vorgesehen, diese Walzwerkzeuge 8C, 8C' sind daher manuell zu wechseln. Jede der Wechseleinrichtungen 11 weist vier Aufnahmen 12A bis 12D für Walzwerkzeuge 8 auf, auf die im Zusammenhang mit Fig. 4 näher eingegangen werden wird. Die Wechseleinrichtungen 11 sind drehbar um jeweils eine Drehachse 13, 13' (vgl. Fig. 2 und Fig. 4) gelagert, so dass jede ihrer Aufnahmen 12 in eine für das Auswechseln des Walzwerkzeugs 8 optimale Position gebracht werden kann. Vorzugsweise verlaufen die Drehachsen 13, 13' parallel zur Mittelachse 3.

Fig. 3 zeigt die Vorrichtung aus Fig. 1 in einer Stellung zum Wechseln der Walzwerkzeuge 8. Die bereits im Zusammenhang mit Fig. 1 oder Fig. 2 beschriebenen Merkmale sind in Fig. 3 mit entsprechenden Bezugszeichen versehen. Um das automatische Wechseln der Walzwerkzeuge 8 zu ermöglichen, sind die beiden äußeren Axialschlitten 10A, 10B in die äußersten Positionen gefahren worden; der erste Axialschlitten 10A ist also ganz nach links, also in Richtung der ersten Körnerspitze 2A gefahren worden und der zweite Axialschlitten 10B ist ganz nach rechts, also in Richtung der zweiten Körnerspitze 2B gefahren worden. Zudem sind die ersten Walzwerkzeuge 8A, 8A' (mit ihren Walzzylindern 14) um jeweils 90° in Richtung der ersten Körnerspitze 2A geschwenkt worden, so dass die ersten Walzwerkzeuge 8A, 8A' unmittelbar vor den ersten Wechseleinrichtungen 11A, 11A' angeordnet sind. Ebenso sind die zweiten Walzwerkzeuge 8B, 8B' (mit ihren Walzzylindern 14) um jeweils 90° in Richtung der zweiten Körnerspitze 2B geschwenkt worden, so dass die zweiten Walzwerkzeuge 8B, 8B' unmittelbar vor den zweiten Wechseleinrichtungen 11B, 11B' angeordnet sind. In dieser Stellung kann an den beiden äußeren Bearbeitungseinheiten (Axialschlitten 10A, 10B) ein automatischer Wechsel der Walzwerkzeuge 8A, 8A', 8B, 8B' erfolgen. An der mittleren (optionalen) Bearbeitungseinheit (Axialschlitten 10C) muss der Wechsel der Walzwerkzeuge 8C, 8C' hingegen manuell erfolgen.

Fig. 4 zeigt einen Teil der Vorrichtung aus Fig. 1 in vergrößerter Ansicht. Die bereits im Zusammenhang mit Fig. 1 bis Fig. 3 beschriebenen Merkmale sind in Fig. 4 mit entsprechenden Bezugszeichen versehen. In Fig. 4 ist aus Gründen der besseren Übersichtlichkeit lediglich die linke Hälfte der Vorrichtung 1 dargestellt, also die Umgebung des Spindelkastens 5A sowie der ersten Körnerspitze 2A. Deutlich erkennbar ist in Fig. 4 die um 90° geschwenkte Stellung der beiden Walzwerkzeuge 8A, 8A' und ihrer Walzzylinder 14. Ebenso ist erkennbar, dass die beiden Wechseleinrichtungen 11A, 11A' jeweils vier Aufnahmen 12A bis 12D aufweisen. Die beiden Walzwerkzeuge 8A, 8A' sind in der gezeigten Stellung in eine der vier Aufnahmen 12A bis 12D eingesetzt, während die anderen drei der vier Aufnahmen 12A bis 12D mit anderen Werkzeugen bestückt sind, die auf die Walzzylinder 14 aufgesetzt werden können, indem die Aufnahmen 12A bis 12D der Wechseleinrichtungen 11A, 11A' so lange um die Drehachsen 13, 13' herum rotieren (in Fig. 4 durch gestrichelte kreisförmige Linien angedeutet), bis das gewünschte Werkzeug in der gewünschten Position ist und ein automatischer Wechsel erfolgen kann. Schließlich ist in Fig. 4 auch die Anordnung der ersten Wellenablage 15A an dem ersten Axialschlitten 10A erkennbar, die eine V-förmige Oberseite zur Ablage der (in Fig. 4 nicht gezeigten) Welle 4 aufweist und in vertikaler Richtung relativ zu dem ersten Axialschlitten 10A verschiebbar ist (angedeutet durch einen Doppelpfeil). Die Wechseleinrichtungen 11A, 11A' sind vorzugsweise in vertikaler Richtung verschiebbar, beispielsweise indem sie entlang einer Führung 16 nach oben oder nach unten verschoben werden können (ebenfalls angedeutet durch einen Doppelpfeil).

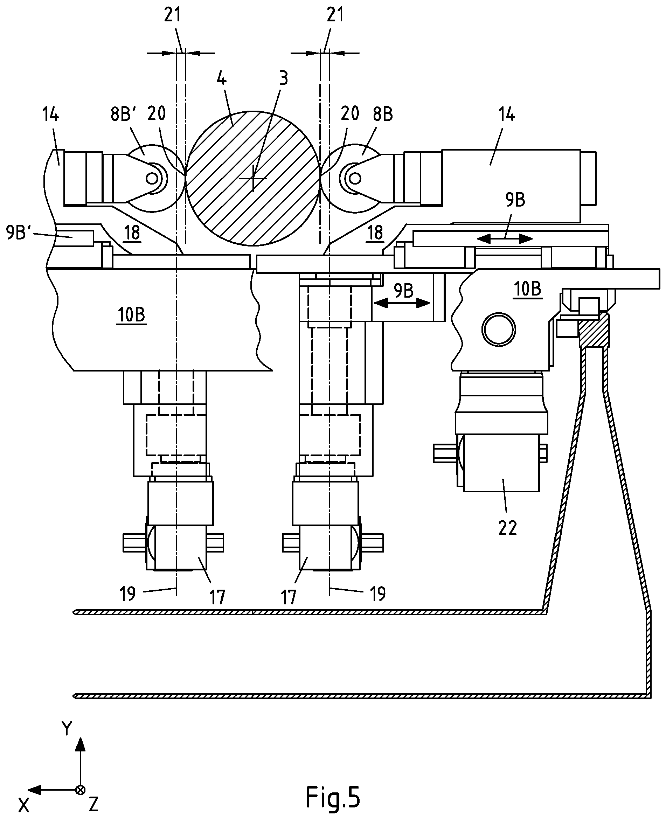

Fig. 5 zeigt schließlich einen Teil der Vorrichtung 1 aus Fig. 1 in einer Seitenansicht entlang der in Fig. 1 eingezeichneten Schnittebene V-V. In der Seitenansicht ist die konstruktive Umsetzung der schwenkbaren Lagerung der Walzwerkzeuge 8B, 8B' sowie der ihnen zugeordneten Walzzylinder 14 besonders gut erkennbar: Die beiden Radialschlitten 9B, 9B' weisen jeweils einen Schwenkantrieb 17 auf. Die Schwenkantriebe 17 sind über jeweils einen Arm 18 mit jeweils einem Walzzylinder 14 verbunden. Durch die Schwenkantriebe 17 können die Walzzylinder 14 (und die daran gelagerten Walzwerkzeuge 8B, 8B') daher um jeweils eine vertikal verlaufende Schwenkachse 19 in beide entgegengesetzten Drehrichtungen verschwenkt werden. Die Schwenkachsen 19 verlaufen möglichst dicht an Berührpunkten 20, durch welche die Walzwerkzeuge 8B, 8B' die Bearbeitungskräfte (z.B. Walzkräfte) auf die Welle 4 übertragen. Vorzugsweise bilden die Schwenkachsen 19 und die Berührpunkte 20 einen Abstand 21 im Bereich zwischen 0 mm und 50 mm, insbesondere zwischen 0 mm und 35 mm (in radialer Richtung in einer horizontalen Ebene). Hierdurch wird eine Verringerung der Drehmomente erreicht, die durch die Bearbeitungskräfte (z.B. Walzkräfte) verursacht werden und die gewünschte Schwenkstellung der Walzwerkzeuge während der Bearbeitung unbeabsichtigt verändern könnte. Weiterhin ist in Fig. 5 ein Radialantrieb 22 erkennbar, der den Radialschlitten 9B in radialer Richtung verschieben kann (in entsprechender Weise weist der gegenüberliegende Radialschlitten 9B' einen - nicht dargestellten - Radialantrieb 22 auf). Wenngleich Fig. 5 aus Gründen der besseren Übersichtlichkeit nur die zweiten Walzwerkzeuge 8B, 8B' und die zweiten Radialschlitten 9B, 9B' zeigt, sind die Ausführungen auf die ersten Walzwerkzeuge 8A, 8A' und die ersten Radialschlitten 9A, 9A' übertragbar, da die ersten Walzwerkzeuge 8A, 8A' in entsprechender Weise schwenkbar gelagert sind.

### Bezugszeichenliste:

- 1:: Vorrichtung
- 2, 2A, 2B:: Körnerspitze
- 3:: Mittelachse
- 4:: Welle
- 5A:: Spindelkasten
- 5B:: Reitstock
- 6, 6A, 6B:: Antrieb
- 7, 7A, 7B:: Rotationsmitnehmer
- 8, 8A, 8A', 8B, 8B', 8C, 8C':: Walzwerkzeug
- 9, 9A, 9A', 9B, 9B', 9C, 9C':: Radialschlitten
- 10, 10A, 10B, 10C:: Axialschlitten
- 11, 11A, 11A', 11B, 11B':: Wechseleinrichtung
- 12, 12A, 12B, 12C, 12D:: Aufnahme
- 13, 13':: Drehachse
- 14:: Walzzylinder
- 15A, 15B:: Wellenablage
- 16:: Führung
- 17:: Schwenkantrieb
- 18:: Arm
- 19:: Schwenkachse
- 20:: Berührpunkt
- 21:: Abstand
- 22:: Radialantrieb

## Patentansprüche

1. Vorrichtung (1) zum Bearbeiten, insbesondere zum Festwalzen, von Wellen (4) und anderen Bauteilen, umfassend:
- zwei Körnerspitzen (2A, 2B) zur beidseitigen Aufnahme einer zu bearbeitenden Welle (4),
- wenigstens einen Antrieb (6A, 6B) zum Drehen der zu bearbeitenden Welle (4),
- wenigstens ein Paar von Walzwerkzeugen (8A, 8A', 8B, 8B', 8C, 8C') zum Bearbeiten, insbesondere Festwalzen der zu bearbeitenden Welle (4),
- wobei die beiden Körnerspitzen (2A, 2B) auf einer Mittelachse (3) angeordnet sind,
- wobei wenigstens eine Körnerspitze (2B) entlang der Mittelachse (3) verschiebbar ist,
- wobei wenigstens ein Paar von Walzwerkzeugen (8A, 8A', 8B, 8B', 8C, 8C') auf einem beweglichen Axialschlitten (10A, 10B, 10C) angeordnet ist, der entlang der Mittelachse (3) verschiebbar ist, und
- wobei die Walzwerkzeuge (8A, 8A', 8B, 8B', 8C, 8C') in radialer Richtung relativ zu der Mittelachse (3) verschiebbar sind,
**gekennzeichnet durch**
wenigstens eine Wechseleinrichtung (11A, 11A', 11B, 11B') zum Wechseln der Walzwerkzeuge (8A, 8A', 8B, 8B') und dass auf wenigstens einem Axialschlitten (10A, 10B, 10C) eine in vertikaler Richtung verschiebbare Wellenablage (15A, 15B) angeordnet ist.

2. Vorrichtung (1) nach Anspruch 1,
**dadurch gekennzeichnet, dass**
die Wechseleinrichtung (11A, 11A', 11B, 11B') beweglich, insbesondere um eine Drehachse (13, 13') drehbar und/oder in vertikaler Richtung verschiebbar gelagert ist.

3. Vorrichtung (1) nach Anspruch 2,
**dadurch gekennzeichnet, dass**
die Wechseleinrichtung (11A, 11A', 11B, 11B') wenigstens zwei, insbesondere wenigstens vier Aufnahmen (12A, 12B, 12C, 12D) für Walzwerkzeuge (8A, 8A', 8B, 8B') aufweist.

4. Vorrichtung (1) nach einem der Ansprüche 1 bis 3,
**dadurch gekennzeichnet, dass**
die Wechseleinrichtung (11A, 11A', 11B, 11B') eine Spannvorrichtung zum Lösen und Spannen der Walzwerkzeuge (8A, 8A', 8B, 8B') aufweist.

5. Vorrichtung (1) nach einem der Ansprüche 1 bis 4,
**dadurch gekennzeichnet, dass**
die Wechseleinrichtung (11A, 11A', 11B, 11B') im Bereich der Körnerspitzen (2A, 2B) angeordnet ist.

6. Vorrichtung (1) nach einem der Ansprüche 1 bis 5,
**gekennzeichnet durch**
zwei oder mehr Paare von Walzwerkzeugen (8A, 8A', 8B, 8B', 8C, 8C').

7. Vorrichtung (1) nach Anspruch 1,
**dadurch gekennzeichnet, dass**
auf wenigstens einem Axialschlitten (10A, 10B, 10C) zwei in radialer Richtung verschiebbare Radialschlitten (9A, 9A', 9B, 9B', 9C, 9C') angeordnet sind, auf denen jeweils ein Walzwerkzeug (8A, 8A', 8B, 8B', 8C, 8C') angeordnet ist.

8. Vorrichtung (1) nach einem der Ansprüche 1 bis 7,
**dadurch gekennzeichnet, dass**
wenigstens ein Walzwerkzeug (8A, 8A', 8B, 8B') schwenkbar gelagert ist, insbesondere relativ zu der Mittelachse (3) beidseitig um wenigstens 90° schwenkbar ist.

9. Vorrichtung (1) nach einem der Ansprüche 1 bis 8,
**dadurch gekennzeichnet, dass**
jedem Walzwerkzeug (8A, 8A', 8B, 8B', 8C, 8C') ein Walzzylinder (14), insbesondere ein hydraulischer Walzzylinder (14) zugeordnet ist.

10. Vorrichtung (1) nach Anspruch 8 oder 9,
**dadurch gekennzeichnet, dass**
wenigstens ein schwenkbar gelagertes Walzwerkzeug (8A, 8A', 8B, 8B') eine vertikale Schwenkachse (19) aufweist, die einen Abstand (21) zu einem Berührpunkt (20) von Walzwerkzeug und Welle (4) aufweist, der 50 mm oder weniger, insbesondere von 35 mm oder weniger beträgt.

11. Verwendung einer Vorrichtung (1) nach einem der Ansprüche 1 bis 10 zum Festwalzen von Wellen (4), insbesondere von Radsatzwellen von Radsätzen für Schienenfahrzeuge.

## Claims

1. Device (1) for machining, in particular for deep-rolling, shafts (4) and other components, comprising:
- two live centres (2A, 2B) for receiving a shaft (4) to be machined on both sides,
- at least one drive (6A, 6B) for rotating the shaft (4) to be machined,
- at least one pair of rolling tools (8A, 8A', 8B, 8B', 8C, 8C') for machining, in particular deep-rolling, the shaft (4) to be machined,
- wherein the two live centres (2A, 2B) are arranged on a central axis (3),
- wherein at least one live centre (2B) is displaceable along the central axis (3),
- wherein at least one pair of rolling tools (8A, 8A', 8B, 8B', 8C, 8C') is arranged on a movable axial slide (10A, 10B, 10C), which is displaceable along the central axis (3), and
- wherein the rolling tools (8A, 8A', 8B, 8B', 8C, 8C') are displaceable in the radial direction relative to the central axis (3),
**characterised by**
at least one changing apparatus (11A, 11A', 11B, 11B') for changing the rolling tools (8A, 8A', 8B, 8B') and in that on at least one axial slide (10A, 10B, 10C) is arranged a shaft support (15A, 15B) that is displaceable in the vertical direction.

2. Device (1) according to claim 1,
**characterised in that**
the changing apparatus (11A, 11A', 11B, 11B') is movable, in particular rotatable about an axis of rotation (13, 13') and/or displaceable in the vertical direction.

3. Device (1) according to claim 2,
**characterised in that**
the changing apparatus (11A, 11A', 11B, 11B') has at least two, in particular at least four receptacles (12A, 12B, 12C, 12D) for rolling tools (8A, 8A', 8B, 8B').

4. Device (1) according to any one of claims 1 to 3,
**characterised in that**
the changing apparatus (11A, 11A', 11B, 11B') has a clamping device for releasing and clamping the rolling tools (8A, 8A', 8B, 8B').

5. Device (1) according to any one of claims 1 to 4,
**characterised in that**
the changing apparatus (11A, 11A', 11B, 11B') is arranged in the region of the live centres (2A, 2B).

6. Device (1) according to any one of claims 1 to 5,
**characterised by**
two or more pairs of rolling tools (8A, 8A', 8B, 8B', 8C, 8C').

7. Device (1) according to claim 1,
**characterised in that**
on at least one axial slide (10A, 10B, 10C) are arranged two radial slides (9A, 9A', 9B, 9B', 9C, 9C) which are displaceable in the radial direction and on each of which is arranged a rolling tool (8A, 8A', 8B, 8B', 8C, 8C').

8. Device (1) according to any one of claims 1 to 7,
**characterised in that**
at least one rolling tool (8A, 8A', 8B, 8B') is pivotably mounted, in particular is pivotable by at least 90° on both sides relative to the central axis (3).

9. Device (1) according to any one of claims 1 to 8,
**characterised in that**
each rolling tool (8A, 8A', 8B, 8B', 8C, 8C') is assigned a rolling cylinder (14), in particular a hydraulic rolling cylinder (14).

10. Device (1) according to claim 8 or 9,
**characterised in that**
at least one pivotably mounted rolling tool (8A, 8A', 8B, 8B') has a vertical pivot axis (19), which has a distance (21) to a point of contact (20) of rolling tool and shaft (4) that is 50 mm or less, in particular 35 mm or less.

11. Use of a device (1) according to any one of claims 1 to 10 for deep-rolling shafts (4), in particular wheelset shafts of wheelsets for rail vehicles.

## Revendications

1. Dispositif (1) d'usinage, notamment de galetage, d'arbres (4) et d'autres composants, comprenant :
- deux pointes fixes (2A, 2B) destinées à recevoir, des deux côtés, un arbre à usiner (4),
- au moins un entraînement (6A, 6B) destiné à faire tourner l'arbre à usiner (4),
- au moins une paire de matrices de laminage (8A, 8A', 8B, 8B', 8C, 8C') destinées à l'usinage, notamment au galetage, de l'arbre à usiner (4),
- les deux pointes fixes (2A, 2B) étant agencées sur un axe médian (3),
- au moins une pointe fixe (2B) pouvant être déplacée le long de l'axe médian (3),
- au moins une paire de matrices de laminage (8A, 8A', 8B, 8B', 8C, 8C') étant agencée sur un chariot axial mobile (10A, 10B, 10C), lequel peut être déplacé le long de l'axe médian (3), et
- les matrices de laminage (8A, 8A', 8B, 8B', 8C, 8C') pouvant être déplacées dans le sens radial par rapport à l'axe médian (3),
**caractérisé par**
au moins un dispositif de changement (11A, 11A', 11B, 11B') destiné au remplacement des matrices de laminage (8A, 8A', 8B, 8B') et un support d'arbre (15A, 15B), lequel peut être déplacé dans le sens vertical et est agencé sur au moins un chariot axial (10A, 10B, 10C).

2. Dispositif (1) selon la revendication 1,
**caractérisé en ce que**
le dispositif de changement (11A, 11A', 11B, 11B') est mobile, notamment est monté pivotant autour d'un axe de rotation (13, 13') et/ou est monté de manière à pouvoir être déplacé dans le sens vertical.

3. Dispositif (1) selon la revendication 2,
**caractérisé en ce que**
le dispositif de changement (11A, 11A', 11B, 11B') présente au moins deux, notamment au moins quatre logements (12A, 12B, 12C, 12D) destinés aux matrices de laminage (8A, 8A', 8B, 8B').

4. Dispositif (1) selon l'une quelconque des revendications 1 à 3,
**caractérisé en ce que**
le dispositif de changement (11A, 11A', 11B, 11B') présente un dispositif de serrage destiné au desserrage et au serrage des matrices de laminage (8A, 8A', 8B, 8B').

5. Dispositif (1) selon l'une quelconque des revendications 1 à 4,
**caractérisé en ce que**
le dispositif de changement (11A, 11A', 11B, 11B') est agencé dans la zone des pointes fixes (2A, 2B).

6. Dispositif (1) selon l'une quelconque des revendications 1 à 5,
**caractérisé par**
deux ou plusieurs paires de matrices de laminage (8A, 8A', 8B, 8B', 8C, 8C').

7. Dispositif (1) selon la revendication 1,
**caractérisé en ce que**
sur au moins un chariot axial (10A, 10B, 10C) sont agencés deux chariots radiaux (9A, 9A', 9B, 9B', 9C, 9C'), susceptibles de pouvoir être déplacés dans le sens radial, sur lesquels est agencé une matrice de laminage (8A, 8A', 8B, 8B', 8C, 8C').

8. Dispositif (1) selon l'une quelconque des revendications 1 à 7, **caractérisé en ce que**
au moins une matrice de laminage (8A, 8A', 8B, 8B') est montée de sorte à pivoter, notamment à pivoter de part et d'autre d'au moins 90° par rapport à l'axe médian (3).

9. Dispositif (1) selon l'une quelconque des revendications 1 à 8,
**caractérisé en ce que**
un cylindre de laminage (14), notamment un cylindre de laminage hydraulique (14), est associé à chaque matrice de laminage (8A, 8A', 8B, 8B', 8C, 8C').

10. Dispositif (1) selon la revendication 8 ou 9,
**caractérisé en ce que**
au moins une matrice de laminage (8A, 8A', 8B, 8B'), montée de sorte à pivoter, présente un axe de pivotement vertical (19), situé à une distance (21) par rapport à un point de contact (20) entre la matrice de laminage et l'arbre (4), cette distance étant inférieure ou égale à 50 mm, notamment inférieure ou égale à 35 mm.

11. Utilisation d'un dispositif (1) selon l'une des revendications 1 à 10 pour le galetage d'arbres (4), notamment d'arbres d'essieux de jeux d'essieux pour des véhicules ferroviaires.
